# EUROPEAN PATENT APPLICATION

(11) **EP 3 751 185 A1**
(43) Date of publication of application: **16.12.2020**
(21) Application number: 20179159.7
(22) Date of filing: 10.06.2020
(51) Int. Cl.: F16L 15/00, B61G 1/00, F16L 19/08, F16L 27/12

(54) **CONNECTING DEVICE FOR A FLUID CONDUIT SYSTEM, IN PARTICULAR OF A TRANSPORT VEHICLE, AND RELATED TRANSPORT VEHICLE**

(30) Priority: 11.06.2019 IN 201941023184
(71) Applicant: ALSTOM Transport Technologies, 93400 Saint-Ouen-sur Seine (FR)
(72) Inventor: SHAIK, Bahadursha, 560037 Bengaluru (IN); TISSERANT, Jean-Christophe, 88120 SAPOIS (FR)
(74) Representative: Lavoix

(57) **Abstract**

Connecting device (100) for a fluid conduit system, in particular of a transport vehicle, comprising:
- an inner substantially rigid body (1) having a first hollow tubular portion (2) extending along a longitudinal axis (101) and a first end portion (3)adapted to be connected to a first component (102) of said fluid conduit system;
- an outer substantially rigid body (10) having a second hollow tubular portion (11) extending along said longitudinal axis and a second end portion (12) adapted to be connected to a second component (103) of said fluid conduit system, the first hollow tubular portion of the inner body being inserted, at least partially, inside the second hollow tubular portion of the outer body;
- a connection assembly (30) configured to connect said inner body with said outer body so that they move one relative to the other, at least along said longitudinal axis, while said first end portion and said second end portion are connected with the first component and second component, respectively.

## Description

The present invention relates to a connecting device for a fluid conduit system, in particular of a transport vehicle, and to a related transport vehicle, preferably a railway vehicle.

The present invention is particularly suitable for being used in fluid conduit systems of railway vehicles and will be described hereinafter by making specific reference to such application without intending in any way to limit its possible applications, for example in connection with other types of transport vehicles, such as trucks, buses et cetera.

As known, transport vehicles, such as railway vehicles, are provided with one or more fluid conduit systems installed on-board.

Such systems, for example of hydraulic or pneumatic type, are suitable to circulate within the railway vehicle a fluid, e.g. water, air, a pressurize fluid, in order to perform determined functions, such as conditioning, breaking, et cetera.

To this end, a certain number of main conducting pipes or tubes are positioned in suitable spaces and are interconnected to each other by means of connectors whose main function is to join adjacent ends of two pipes in order to form a continuous circuit without any leakage.

In operations, the pipes, as well as the connectors, are exposed to considerable mechanical stresses, due for example to changing environmental conditions, e.g. passing from cold to warm temperatures, and/or to mounting applications, e.g. tortuous paths, bending, et cetera.

As a consequence, due to the fact that pipes are usually made of substantially rigid material, the various mechanical stresses are discharged over the connectors with the risk of damaging them, or in any case of causing undesired leakages.

In addition, connectors commonly used nowadays, e.g. of 24° bite type, as defined by relevant standards ISO 8434-1 and DIN 2353, are also rigid in structure and have a rather reduced tolerance in their constructive body in order to absorb external variations coming from the mating pipes.

Therefore, when connecting two pipes, if there is an overall extra length which cannot be accommodated inside the connector, a technician has to cut portions of at least one pipe, in order to properly resize the entire connection, and then he has to proceed with the junction, for instance by crimping the pipe and the connector together.

Conversely, if the overall length of the pipes to be interconnected is not sufficient for completing the junction, a technician has first to add one or more additional pieces to at least one of the pipes to be interconnected, e.g. by soldering, crimping or the like, and then it is possible to proceed and complete the junction via the connector.

Clearly, such solutions are not cost effective, are cumbersome and time consuming.

Therefore, it is evident the need of having fluid conducting systems, in particular of transport vehicles further improved in order to face such technical issues and solve at least partially, some of the above indicated drawbacks and operational inconvenient.

Hence, it is a main aim of the present invention to provide a solution for realizing fluid conduit systems, in particular of transport vehicles, offering substantial improvements over known solutions, especially as regard to the capability of better facing mechanical stresses thus eliminating, or at least substantially reducing, the possibility of damages and/or leakages at the junction of two or more pipes.

Within the scope of this aim, an object of the present invention is to provide a solution for realizing fluid conduit systems, in particular of transport vehicles, which offers improved capabilities of realizing junctions when the overall length of pipes to be connected is over- or under-sized, reducing significantly, if not eliminating completing, the need for technicians to resize at least one of the pipes to be connected before completing the junction, or the need of intervention of skilled workers, for example for soldering.

Yet a further object of the present invention is to provide a solution for realizing fluid conduit systems, in particular of transport vehicles, which is highly reliable, relatively easy to realize and implement at competitive costs.

This aim, these objects and others which will become apparent hereinafter are achieved by a connecting device for a fluid conduit system, in particular of transport vehicles, characterized in that it comprises at least:
- an inner substantially rigid body having a first hollow tubular portion extending along a longitudinal axis and a first end portion adapted to be connected to a first component of said fluid conduit system;
- an outer substantially rigid body having a second hollow tubular portion extending along said longitudinal axis and a second end portion adapted to be directly connected to a second component of said fluid conduit system, the first hollow tubular portion of the inner body being inserted, at least partially, inside the second hollow tubular portion of the outer body; and
- a connection assembly configured to connect said inner body with said outer body so that they move one relative to the other, at least along said longitudinal axis, while said first end portion and said second end portion are mechanically connected with said first component and the second component, respectively.

According to other peculiar aspects and possible embodiments, the connecting device for a fluid conduit system, in particular of a transport vehicle, according to the present invention, comprises one or more of the following characteristics taken individually or in any possible combination:
- the connection assembly is configured to connect the inner body with the outer body so that they further move one relative to the other at least along an additional axis transversal to the longitudinal axis;
- the connection assembly comprises a compression spring, in particular a helical compression spring, extending along the longitudinal axis and positioned between an outer surface of the first hollow tubular portion of the inner body and an inner surface of the second hollow tubular portion of the outer body;
- the connection assembly comprises a first substantially deformable seal positioned at an end and around the outer surface of the first hollow tubular portion;
- the connection assembly comprises a groove provided at an end and running along an inner surface of the second hollow tubular portion of the outer body;
- the connection assembly comprises a retainer ring having a slit which is inserted inside the groove;
- at least one of the first end portion and the second end portion, preferably both end portions, comprises an internal threaded surface adapted to be positioned around the outer surface of and allow mechanical coupling with an associated end of the first component and/or of the respective second component;
- the first end portion comprises a first nut-shaped member having a first internal threaded surface adapted to be positioned around the first outer surface of and allow mechanical coupling with an associated end of the first component;
- the second end portion comprises a second nut-shaped member having a second internal threaded surface adapted to be positioned around the second outer surface of and allow mechanical coupling with an associated end of the second component;
- at least one ring suitable to be interposed between the first internal threaded surface of the first nut-shaped member and the first outer surface of the first component when mechanically coupling the first end portion with the associated end of the first component of the fluid conduit system or between the second internal threaded surface of the second-nut shaped member and the second outer surface when mechanically coupling the second end portion with the associated end of the second component;
- the first end portion of the inner body comprises, on its external surface, a first external threaded surface, and the connecting device further comprises a first nut-shaped member screwed onto the first external threaded surface and having an internal threaded surface for direct mechanical coupling with a first pipe or component of the fluid conduit system;
- the second end portion of the outer body comprises, on its outer surface, a second external threaded surface, and the connecting device further comprises a second nut-shaped member screwed onto the second threaded surface and having an internal threaded surface for direct mechanical coupling with a second pipe of the fluid conduit system.

The above mentioned aim and objects of the present invention are also achieved by a transport vehicle, in particular a railway vehicle, comprising an on-board fluid conduit system comprising at least a first substantially rigid pipe and a second substantially rigid pipe, characterized in that said fluid conduit system further comprises at least one connecting device as above indicated, and in particular as defined in the relevant appended claims, and as per details given in the following description.

Further characteristics and advantages will become apparent from the description of some preferred but not exclusive exemplary embodiments of a connecting device for a fluid conduit system, in particular of a transport vehicle, and related transport vehicle, according to the invention, illustrated only by way of non-limitative examples with the accompanying drawings, wherein:
Figure 1 is a view illustrating an exemplary connecting device for a fluid conduit system, in particular of a transport vehicle, according to the invention;
Figure 2 illustrates a cross-section of the connecting device of figure 1 taken along the plane A-A;
Figure 3 shows in a greater detail the indicated zone (B) of figure 2;
Figure 4 schematically shows an example of a component used in the connecting device depicted in figure 1;
Figure 5 is a schematic view showing a possible embodiment of the end portions of the connecting device of figure 1.

It should be noted that in the detailed description that follows, identical or similar components, either from a structural and/or functional point of view, have the same reference numerals, regardless of whether they are shown in different embodiments of the present disclosure.

It should be also noted that in order to clearly and concisely describe the present disclosure, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning.

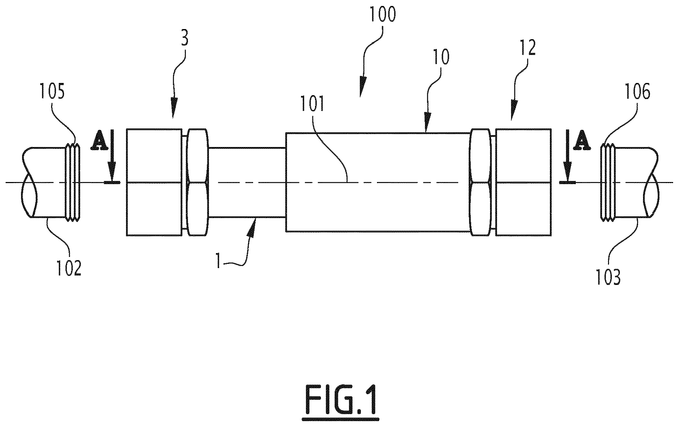

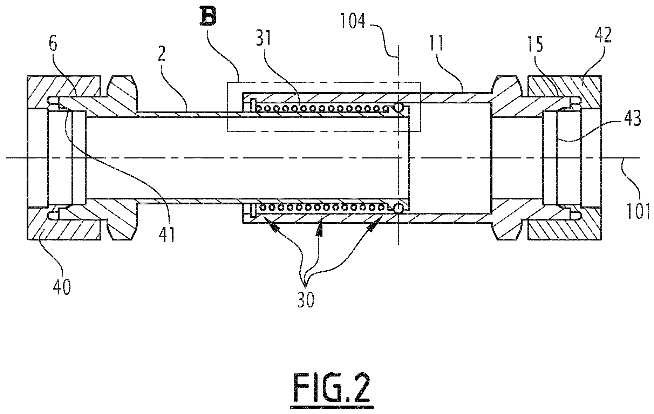

An exemplary embodiment of a connecting device according to the present invention is illustrated in figure 1 by the reference number 100 and comprises at least an inner body 1 and an outer body 10 devised to be mutually coupled to each other via a connection assembly, indicated as a whole by the reference number 30 in figure 2.

More in detail, the inner body 1 is substantially rigid and comprises a first hollow tubular portion 2 extending along a longitudinal axis 101, and a first end portion 3 which is adapted to be mechanically connected to a first component of the fluid conduit system, e.g. a pipe schematically represented in figure 1 by the reference number 102.

In turn, the outer body 10 is also substantially rigid and comprises a second hollow tubular portion 11 extending along the longitudinal axis 101, and a second end portion 12 which is adapted to be mechanically connected to a second component of the fluid conduit system, e.g. a pipe schematically represented in figure 1 by the reference number 103.

The inner body 1 and/or the outer body 10 can be made for example of carbon steel, or stainless steel, or copper alloys or any other material suitable for the application.

According to the embodiments of the invention, and as illustrated for example in figure 2, the first hollow tubular portion 2 of the inner body 1 is inserted, at least partially, inside the second hollow tubular portion 11 of the outer body 10.

In turn, the connection assembly 30 is configured to connect the inner body 1 with the outer body 10 so that they move one relative to the other, at least along the longitudinal axis 101, while the first end portion 3 of the inner body 1 and the second end portion 12 of the outer body 10 are mechanically connected with the first component 102 and the second component 103, respectively.

According to a possible embodiment of the connecting device 100 according to the invention, and as it will also become more apparent from the following description, the connection assembly 30 is configured to connect the inner body 1 with the outer body 10 so that they move one relative to the other, not only along the longitudinal axis 101, but also at least along an additional axis 104 transversal to the longitudinal axis 101, while the first end portion 3 of the inner body 1 and the second end portion 12 of the outer body 10 are mechanically connected with the first component 102 and the second component 103, respectively. This helps in accommodating any misalignment between the first component 102 and the second component 103.

With the definition of "transversal" it has to be understood hereby an axis 104 which is not parallel to the longitudinal axis 101; perpendicularity is meant to be a particular case of an axis transversal to the longitudinal axis 101.

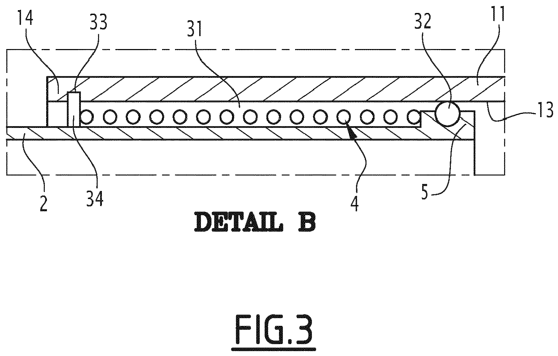

According to an embodiment of the connecting device 100, and as illustrated in figures 2 and 3, the connection assembly 30 comprises a spring 31 extending along the longitudinal axis 101 and which is positioned between an outer surface 4 of the first hollow tubular portion 2 of the inner body 1 and an inner surface 13 of the second hollow tubular portion 11 of the outer body 10.

In particular, the spring 31 is for example a helical spring, preferably a compression spring 31.

According to an embodiment, and as better illustrated in figure 3, the spring 31 is accommodated in a closed space delimited by the outer surface 4 and the inner surface 13 facing to each other, and by two components of the connection assembly 30 which are positioned at two opposite ends of the spring 31 itself.

In particular, according to a possible embodiment, the connection assembly 30 comprises a first seal 32 which is made of a deformable material, and is positioned around the outer surface 4 of the first hollow tubular portion 2, at an end 5 which is opposite to the first end portion 3.

The first seal 32 can comprise any suitable type of dynamic radial seal, such as for example an O-ring made of PTEF, rubber such as Viton, or any other material suitable for the application.

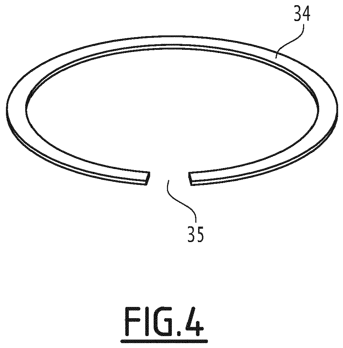

Further, the connection assembly 30 comprises:
- a groove 33 which runs along the inner surface 13 of the second hollow tubular portion 11 at an end 14 of the second hollow tubular portion 11 opposite to the first end portion 3; and
- a retainer ring 34 having a slit 35, an exemplary embodiment of which is illustrated in figure 4, which is inserted inside the groove 33.

The retainer ring 34 can be made for instance of carbon steel or stainless steel; the presence of the slit 35 allows reducing the diameter of the retainer ring 34 whilst it is inserted into the groove 33.

In this way, the spring 31 is confined, preferably pre-loaded, in the closed space surrounded by the outer surface 4 of the first hollow tubular portion 2, the inner surface 13 of the second hollow tubular portion 11, and by the seal 32 and the retainer ring 34.

Accordingly, when the inner body 1 and the outer body 10 move one relative to the other, the spring 31 is constrained to have linear displacements along the longitudinal axis 101 without the risk of undesired deviations that could cause stresses to the parts interconnected, and/or form gaps.

Further, the deformable seal 32, by deforming, allows the inner body 1 and the outer body 10 to move one relative to the other transversally with respect to the longitudinal axis 101.

In this way, the connection assembly 30 as a whole permits relative movements in different directions, thus allowing to absorb different type of stresses exerted on the junction areas.

Conveniently, in the connecting device 100 according to the present invention, at least one of the first end portion 3 and the second end portion 12, preferably both end portions 3 and 12, comprises an internal threaded surface adapted to be positioned around the outer surface of and allow mechanical coupling with an associated end of the first component 102 and/or of the respective second component 103.

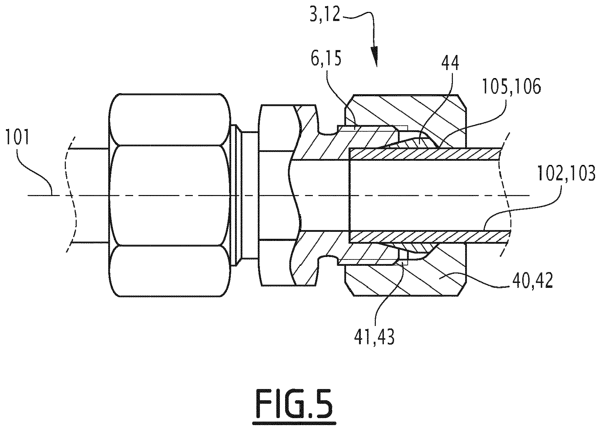

In particular, according to a possible embodiment, and as illustrated for example in figure 5, where for the sake of simplicity only one end portion is illustrated to represent both end portions 3 and 12, the first end portion 3 comprises a first nut-shaped member 40 having a first internal threaded surface 41 adapted to be positioned around a first outer surface 105 of and allow mechanical coupling with an associated end of the first component 102. Likewise, the second end portion 12 comprises a second nut-shaped member 42 having a second internal threaded surface 43 adapted to be positioned around the second outer surface 106 of and allow mechanical coupling with an associated end of the second component 103.

Further, the first end portion 3 and the second portion 12 comprise a first external threaded surface 6 and a respective second external threaded surface 15 onto which the corresponding first nut-shaped member 40 and respectively the second nut-shaped member 42 are screwed.

According to this embodiment, the connecting device 100 comprises at least one ring, e.g. a compression or cutting ring, schematically indicated in figure 5 by the reference number 44, which is suitable to be interposed between the first internal threaded surface 41 and the first outer surface 105 when mechanically coupling the first end portion 3 with the associated end of the first component 102, or between the second internal threaded surface 43 and the second outer surface 106 when mechanically coupling the second end portion 12 with the associated end of the second component 103.

In particular, according to this embodiment, there are provided two rings 44, one ring 44 being associated with the first nut-shaped member 40, and the second ring 44 being associated with the second nut-shaped member 42.

According to this embodiment, when coupling one end portion of the connecting device 100 with the associated end of the component of the fluid system, for example the first end portion 3 is positioned over the corresponding associated first end 105 of the first component 102, with the ring 44 interposed between the first nut-shaped member 40 and the associated first end 105. Then, the first nut-shaped member 40 is actuated by an operator, namely it is screwed along the external threaded surface 6 of the end portion 3 itself, and in this way it forcedly compresses the ring 44 around the first end 105 of the first component 102. In this way, there is established a mechanical coupling between the end portion 3 of the connecting device and the first component 102 of the fluid conduit system, with the ring 44 firmly fitted in position and tightened around the associated end 105 of the first component 102, ensuring at the same time a fluid-tight connection which prevents leakages.

Exactly the same occurs when connecting the second end portion 12 of the connecting device 100 with the associated second end 106 of the second component 103 via a second ring 44.

In another possible variant of the end portions to be used for example with components of fluid systems having threaded ends, as illustrated for example in figure 2, the first end portion 3 of the inner body 1 is adapted to be directly mechanically connected to a first component, e.g. a pipe 102 of the fluid conduit system, and comprises at least one threaded surface 6.

For instance, this threaded surface 6 can be used for being screwed with a corresponding first end portion 105 of the first component 102 which is externally threaded as shown in figure 2.

Hence, according to this embodiment, the first end portion 3 comprises also in this case, on its external surface, a first external threaded surface 6, and the connecting device 100 further comprises a first nut-shaped member 40 which is threaded onto the first threaded surface 6 and has an internal threaded surface 41 for screwing directly with the corresponding threaded portion 105 of the first component 102 of the fluid conduit system.

In turn, the second end portion 12 of the outer body 10 is also adapted to be directly mechanically connected to the second component, for instance the pipe 103, of the fluid conduit system and comprises at least one threaded surface 15.

For instance, this threaded surface 15 can be used for being screwed with a corresponding threaded portion 106 of the second component 103.

In particular, and as illustrated in figure 2, the second end portion 12 comprises, on its external surface, a second threaded surface 15, and the connecting device 100 further comprises a second nut-shaped member 42 which is threaded onto the second threaded surface 15 and has the internal threaded surface 43 for screwing directly with the corresponding threaded portion 106 of the second component 103, e.g. a pipe 103, of the fluid conduit system.

In practice, according to the embodiment of figure 2, the first and second end portions 2, 12 are adapted to be directly mechanically connected with the corresponding components 102 and 103 of the fluid conduit system.

With the definition of "adapted to be directly mechanically connected" it is hereby meant a mechanical connection between the connecting device 100 and the parts 102-103 to be interconnected which is carried out without using additional material or components, such as screws or rivets, or the compression ring 44 of the embodiment of figure 5, and/or without executing any operation other than simply coupling the parts, namely not carrying out any welding step or the like.

In other words, the connecting device 100 according to this embodiment incorporates the means for mechanically connecting with the corresponding first and second components of the relevant fluid conduit system.

Hence, it is evident from the foregoing description and appended claims that the connecting device 100 according to the present invention, achieves the intended aim and objects since, thanks to its capability to deform along different axes and to vary its total longitudinal length, allows to absorb the various mechanical stresses exerted in operations, in particular at the junction area between pipes, thus substantially reducing, if not eliminating completely, the possibility of damages and/or leakages at the junction between two pipes.

Further, the varying length along the axis of mutual displacement of the inner and outer bodies 1 and 10 reduces significantly, if not completely, the need for technicians to resize at least one of the pipes to be connected before completing the junction.

This result is obtained according to a solution very simple and cost effective which can be used in principle with any suitable type of fluid conduit system installed on board of a railway vehicle, and with any type of railway vehicles as well, such as mainline or underground trains, subway rail vehicles, et cetera, and can be used with minor modifications, with pipes having non-threaded or threaded ends.

Indeed, the embodiments illustrated have the same connection assembly 30 and related components or parts as illustrated in figures 3 and 4, while the end portions and related parts might slightly differ as described in connection with figures 2 and 3 where basically the main difference resides in the use of the compression ring 44.

The connecting device 100 and related transport vehicle, thus conceived are susceptible of modifications and variations, all of which are within the scope of the inventive concept as defined in particular by the appended claims; for example, the materials used can be different from those above indicated.

## Claims

1. A connecting device (100) for a fluid conduit system, in particular of a transport vehicle, **characterized in that** it comprises at least:
- an inner substantially rigid body (1) having a first hollow tubular portion (2) extending along a longitudinal axis (101) and a first end portion (3) adapted to be connected to a first component (102) of said fluid conduit system;
- an outer substantially rigid body (10) having a second hollow tubular portion (11) extending along said longitudinal axis (101) and a second end portion (12) adapted to be connected to a second component (103) of said fluid conduit system, the first hollow tubular portion (2) of the inner body (1) being inserted, at least partially, inside the second hollow tubular portion (11) of the outer body (10); and
- - a connection assembly (30) configured to connect said inner body (1) with said outer body (10) so that they move, one relative to the other, at least along said longitudinal axis (101), while said first end portion (3) and said second end portion (12) are connected with the first component (102) and the second component (103), respectively.

2. A connecting device (100), according to claim 1, wherein said connection assembly (30) is configured to connect said inner body (1) with said outer body (10) so that they further move one relative to the other at least along an additional axis (104) transversal to said longitudinal axis (101).

3. A connecting device (100), according to claim 1 or 2, wherein said connection assembly (30) comprises a compression spring (31) extending along said longitudinal axis (101) and positioned between an outer surface (4) of the first hollow tubular portion (2) of the inner body (1) and an inner surface (13) of the second hollow tubular portion (11) of the outer body (10).

4. A connecting device (100), according to any one of the previous claims, wherein said connection assembly (30) comprises a first substantially deformable seal (32) positioned at an end (5) and around the outer surface (4) of said first hollow tubular portion (2).

5. A connecting device (100), according to any one of the previous claims, wherein said connection assembly (30) comprises a groove (33) provided at an end (14) of and running along an inner surface (13) of the second hollow tubular portion (11) of the outer body (10), and a retainer ring (34) having a slit (35) which is inserted inside said groove (33).

6. A connecting device (100), according to any one of the previous claims wherein said first end portion (3) comprises a first nut-shaped member (40) having a first internal threaded surface (41) adapted to be positioned around the first outer surface (105) of and allow mechanical coupling with an associated end of the first component (102).

7. A connecting device (100), according to any one of the previous claims wherein said second end portion (12) comprises a second nut-shaped member (42) having a second internal threaded surface (43) adapted to be positioned around the second outer surface (106) of and allow mechanical coupling with an associated end of the second component (103).

8. A connecting device (100), according to any one of claim 6 or 7, wherein it further comprises at least one ring (44) suitable to be interposed between said first internal threaded surface (41) and said first outer surface (105) when mechanically coupling the first end portion (3) with the associated end of the first component (102), or between said second internal threaded surface (43) and said second outer surface (106) when mechanically coupling the second end portion (12) with the associated end of the second component (103).

9. A connecting device (100), according to any one of claims 6 to 8, wherein said first end portion (3) and said second portion (12) comprises, on its external surface, a first external threaded surface (6) and a respective second external threaded surface (15) onto which the corresponding first nut-shaped member (40) and respectively the second nut-shaped member (43) are screwed.

10. A transport vehicle, in particular a railway vehicle, comprising an on-board fluid conduit system comprising at least a first substantially rigid pipe (102) and a second substantially rigid pipe (103), **characterized in that** said fluid conduit system comprises at least one connecting device (100) according to one or more of the previous claims, wherein the first end portion (3) of the inner body (1) is connected to said first substantially rigid pipe (102) and said second end portion (12) of the outer substantially rigid body (10) is connected to said second substantially rigid pipe (103).
